# EUROPEAN PATENT APPLICATION

(11) **EP 1 496 504 A1**
(43) Date of publication of application: **12.01.2005**
(21) Application number: 03717590.8
(22) Date of filing: 15.04.2003
(51) Int. Cl.: G11B 7/135

(54) **OPTICAL PICKUP DEVICE AND OPTICAL DISK DEVICE**

(30) Priority: 15.04.2002 JP 2002111736
(71) Applicant: Sony Corporation, Tokyo 141-0001 (JP)
(72) Inventor: KANAZAWA, Takakiyo, c/o SONY CORPORATION, Shinagawa-ku, Tokyo 141-0001 (JP); WATANABE, Tetsu, c/o SONY CORPORATION, Shinagawa-ku, Tokyo 141-0001 (JP); AOKI, Sunao, c/o SONY CORPORATION, Shinagawa-ku, Tokyo 141-0001 (JP)
(74) Representative: Thévenet, Jean-Bruno
(86) International application number: PCT/JP2003/004771
(87) International publication number: WO 2003/088231

(57) **Abstract**

A polarizing beam splitter (21) is secured in a state wherein a bottom plate (2102) thereof contacts closely with an upper face of a substrate (16) and a light receiving element (23) without a gap left therebetween. A quarter-wave plate (17) is attached to the polarizing beam splitter in a state wherein a lower face (1702) thereof contacts closely with an upper face (2104) without a gap left therebetween such that the lengthwise directions and the widthwise directions of them coincide with each other. An objective lens plate (18) is attached in a state wherein a lower face (1806) thereof contacts closely with an upper face (1704) of the quarter-wave plate without a gap left therebetween. A light source (22) is bonded at a mount member (22B) thereof to the upper face of the substrate by means of a bonding agent or the like such that an emitting face of a semiconductor laser (22A) and a front face of the mount member contact closely with a portion of a side face (2106) of the polarizing beam splitter without a gap left therebetween.

## Description

### Technical Field

This invention relates to an optical pickup apparatus and an optical disk apparatus.

### Background Art

It has been proposed to use, in a pickup apparatus for an optical disk, a principle of a flying head similar to that of a hard disk drive apparatus in order to achieve higher density by eliminating a focusing servo actuator.

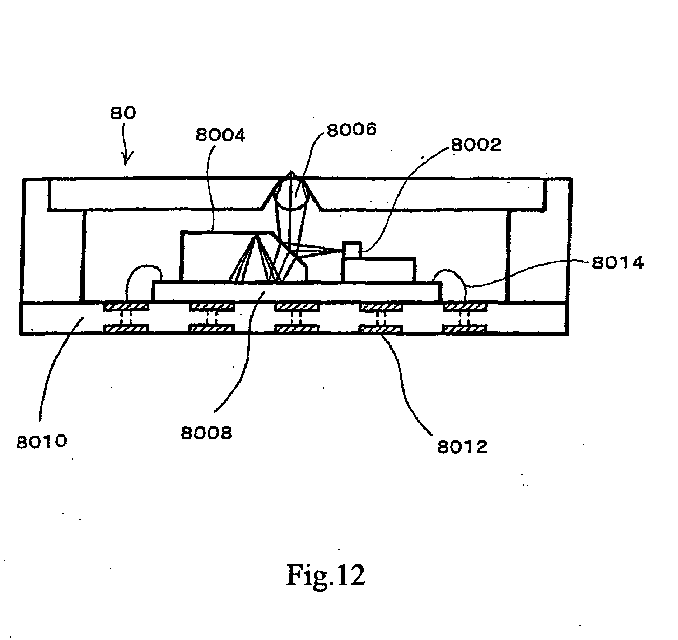

FIG. 12 is a schematic view showing a configuration of an optical pickup for emitting a light beam to a disk and detecting reflected light from within an optical pickup apparatus which utilizes the principle of a flying head.

The optical pickup 80 includes a silicon wafer 8008 on which a semiconductor laser 8002 serving as a light source for emitting a light beam, a polarizing beam splitter (PBS) 8004 which forms an optical system for forming a light path for the light beam, an objective lens 8006 for converging the light beam, a photo-detector (not shown) for detecting the amount of light of the light beam reflected by a recording face of a disk, an electric circuit (not shown) for processing detection signals from the photo-detector and so forth are provided. In order to prevent the semiconductor laser 8002, polarizing beam splitter 8004, photo-detector, electric circuit and so forth from being exposed to and corroded by the external air or to prevent dust from sticking to them and disturbing the light beam, they are accommodated in a single package 8010.

The bottom wall of the package 8010 is formed as a lead frame, and electric terminals 8012 are provided in such a manner as to extend through the bottom wall in its thicknesswise direction, and the electric terminals 8012 and the semiconductor laser 8002 and photo-detector are connected to each other. Thus, electric signals are inputted from and outputted to the outside through the electric terminals 8012.

In such an optical pickup apparatus as described above, in order to raise the follow-up property to surface deflections of a disk, miniaturization of the optical pickup 80 is required. However, such miniaturization is difficult with the configuration which includes the package 8010.

Further, as the temperature of the semiconductor laser 8002 rises due to generation of heat by the semiconductor laser 8002 itself, not only the life of the semiconductor laser 8002 is reduced but also the wavelength fluctuates, resulting in the possibility of deterioration of the reading and writing characteristics. Therefore, it is necessary to radiate the heat of the semiconductor laser 8002 efficiently. Particularly where the optical pickup is miniaturized, since the heat radiation property degrades, it is demanded to further improve the heat radiation property.

The present invention has been made in view of such a circumstance as described above, and an object of the invention resides in provision of an optical pickup apparatus and an optical disk apparatus which are advantageous in achievement of miniaturization. Another object of the present invention resides in provision of an optical pickup apparatus and an optical disk apparatus which are advantageous in improvement of the heat radiation property.

### Disclosure of Invention

In order to attain the object described above, according to the present invention, an optical pickup apparatus which includes an optical pickup having an optical pickup body having a substrate, a light source attached to the substrate, a light receiving element attached to the substrate and an optical member attached to the substrate, and an objective lens and a slider attached to the optical pickup body, and wherein the optical pickup is configured such that the slider is opposed to a recording face of an optical disk and the optical pickup is levitated along a thicknesswise direction of the optical disk by an air now formed between the slider and the recoding face, and the optical member is configured such that a light beam emitted from the light source is illuminated on the recording face through the objective lens and the reflected light beam reflected by the recording face is received by the light receiving element through the objective lens, is characterized in that the optical member is provided in a state wherein the optical member closely contacts with the light source, objective lens and light receiving element without a gap left therebetween.

Meanwhile, according to the present invention, an optical disk apparatus which includes driving means for holding and driving an optical disk to rotate, and an optical pickup apparatus for illuminating light on the optical disk driven to rotate by the driving section and detecting reflected light from the optical disk, the optical pickup apparatus including an optical pickup body having a substrate, a light source attached to the substrate, a light receiving element attached to the substrate and an optical member attached to the substrate, and an objective lens and a slider attached to the optical pickup body, the optical pickup being configured such that the slider is opposed to a recording face of an optical disk and the optical pickup is levitated along a thicknesswise direction of the optical disk by an air flow formed between the slider and the recoding face, the optical member being configured such that a light beam emitted from the light source is illuminated on the recording face through the objective lens and the reflected light beam reflected by the recording face is received by the light receiving element through the objective lens, is characterized in that the optical member is provided in a state wherein the optical member closely contacts with the light source, objective lens and light receiving element without a gap left therebetween.

Therefore, according to the present invention, since the optical member is provided in a condition wherein they closely contact with the light source, objective lens and light receiving element without a gap left therebetween, there is no necessity to provide a package for preventing sticking of dust between the optical member and the light source and between the optical member and the light receiving element.

Further, according to the present invention, an optical pickup apparatus which includes an optical pickup having an optical pickup body having a substrate, a light source attached to the substrate, a light receiving element attached to the substrate and an optical member attached to the substrate, and an objective lens and a slider attached to the optical pickup body, and a resiliently deformable support plate in the form of a small-width plate having the optical pickup attached to an end in a longitudinal direction thereof, and wherein the optical pickup is configured such that the slider is opposed to a recording face of an optical disk and the optical pickup is levitated following up the recording face of the optical disk by an air flow formed between the slider and the recoding face, is characterized in that the support plate has a thermal conductivity and a heat radiating property.

Meanwhile, according to the present invention, an optical disk apparatus which includes driving means for holding and driving an optical disk to rotate, and an optical pickup apparatus for illuminating light on the optical disk driven to rotate by the driving means and detecting reflected light from the optical disk, the optical pickup apparatus including an optical pickup having an optical pickup body having a substrate, a light source attached to the substrate, a light receiving element attached to the substrate and an optical member attached to the substrate, and an objective lens and a slider attached to the optical pickup body, and a resiliently deformable support plate in the form of a small-width plate having the optical pickup attached to an end in a longitudinal direction thereof, the optical pickup being configured such that the slider is opposed to a recording face of an optical disk and the optical pickup is levitated following up the recording face of the optical disk by an air flow formed between the slider and the recoding face, is characterized in that the support plate has a thermal conductivity and a heat radiating property.

Therefore, according to the present invention, since the support plate transmits and radiates heat from the light source rapidly, heat of the light source is radiated effectively.

### Brief Description of Drawings

FIG. 1 is a vertical sectional view showing a configuration of an optical pickup apparatus according to a first embodiment;
FIG. 2 is a block diagram of a control system of the optical disk apparatus of the first embodiment;
FIG. 3 is an exploded perspective view showing a configuration of the optical disk apparatus of the first embodiment;
FIG. 4 is a perspective view of an arm on which an optical pickup of the first embodiment is carried;
FIG. 5 is an exploded perspective view of the arm on which the optical pickup of the first embodiment is carried;
FIG. 6A is a plan view showing a configuration of an optical pickup of a conventional optical pickup apparatus, FIG. 6B a view as viewed in the direction indicated by an arrow mark A of FIG. 6A, FIG. 6C a plan view showing a configuration of the optical pickup of the optical pickup apparatus of the first embodiment, and FIG. 6D a view as viewed in the direction indicated by an arrow mark B of FIG. 6C;
FIG. 7A is a schematic view illustrating a range of movement of the conventional optical pickup apparatus, and FIG. 7B is a schematic view illustrating a range of movement of the optical pickup apparatus of the first embodiment;
FIG. 8 is a perspective view of an arm on which an optical pickup of a second embodiment is carried;
FIG. 9 is an exploded perspective view of the arm on which the optical pickup of the second embodiment is carried;
FIG. 10 is a schematic view illustrating a heat transmission path of the optical pickup apparatus of the second embodiment;
FIGS. 11A, 11B, 11C and 11D are schematic views illustrating production steps of an objective lens plate of the optical pickup apparatus of the first embodiment; and
FIG. 12 is a schematic view of a conventional optical pickup apparatus.

### Best Mode for Carrying out the Invention

In the following, embodiments of an optical pickup apparatus and an optical disk apparatus according to the present invention are described in detail with reference to the drawings.

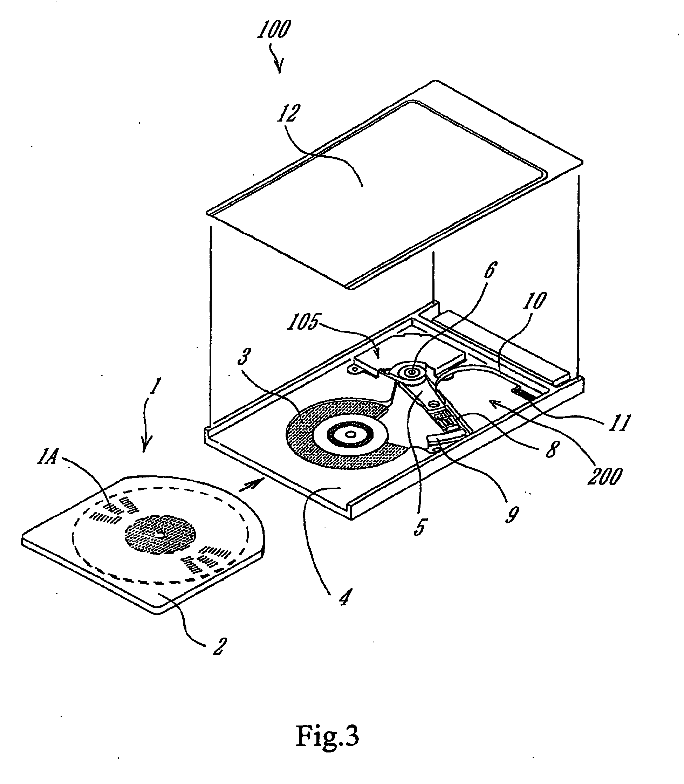

FIG. 3 is an exploded perspective view showing a configuration of an optical disk apparatus of the first embodiment.

The optical disk apparatus 100 is for use with an optical disk cartridge 1 of a size of 85.6 mm (long) × 54 mm (wide) × 5 mm (thick) (the Type 2 size of the PCMCIA), and the optical disk apparatus 100 is constructed such that the optical disk cartridge 1 is loaded into and unloaded from the optical disk apparatus 100.

The optical disk cartridge 1 includes a disk shaped optical disk 1A and a cartridge 2 which contains the optical disk 1A therein. The optical disk 1A is normally kept and used in a state wherein it is accommodated in the cartridge 2. The optical disk 1A may be, for example, a DVD, a DVD-R, a CD, a CD-R or the like.

The optical disk 1A is configured such that a magnetic piece (hub) in the form of a disk having a hole perforated therein is adhered to a central portion thereof so that positioning of the optical disk 1 with respect to a rotary shaft of a spindle motor hereinafter described or attraction by magnetic force may be performed by the hub.

A shutter is attached for opening and closing movement to a lower face of the cartridge 2 such that, when the cartridge 2 is loaded into the optical disk apparatus 100, the shutter is opened, and reading and writing by an optical pickup 8 is performed through the opening.

The optical disk apparatus 100 includes a chassis 4 having a bottom plate in the form of a rectangular plate, and a top cover 12 which covers upper portions of upright walls erected uprightly from side edges of the chassis 4. A spindle motor 3, an electric circuit board 11 and an optical pickup apparatus 200 including the optical pickup 8 are accommodated in an accommodation space defined by the chassis 4 and the top cover 12.

The spindle motor 3 is a driving element for driving the optical disk 1A to rotate and is secured to the chassis 4. The spindle motor 3 chucks the hub of the optical disk 1A of the optical disk cartridge 1 inserted in the direction of an arrow mark using magnetic force and rotates the optical disk 1A.

The optical pickup 8 is disposed through an arm 5 rocked by a voice coil motor 105 serving as a driving element for causing the optical pickup 8 to perform accessing to the optical disk 1A, and performs recording and/or reproduction on and/or from a recording face of the optical disk 1A.

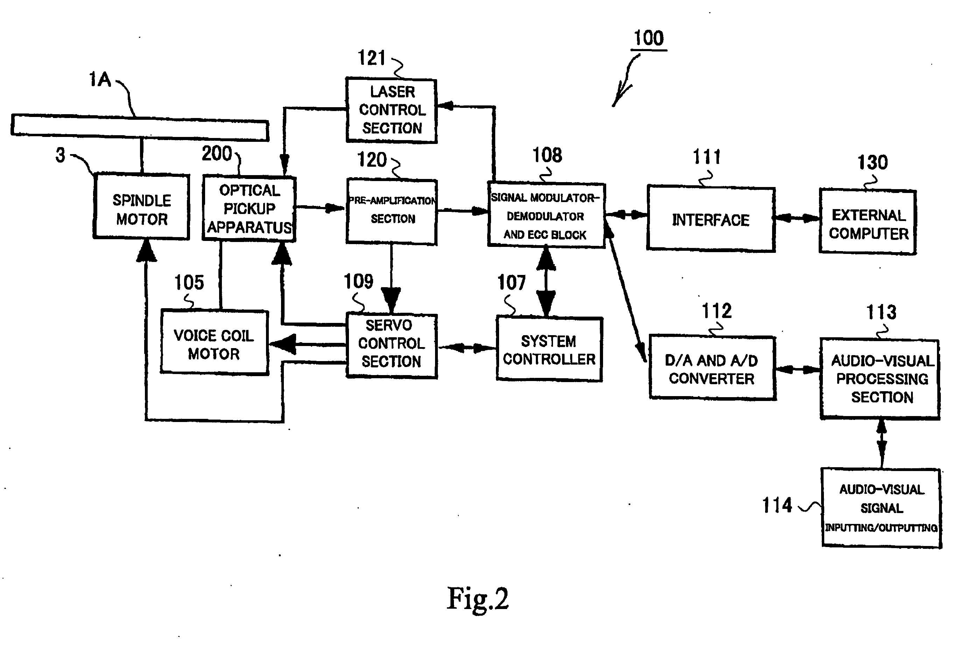

FIG. 2 is a block diagram of a control system of the optical disk apparatus 100.

The spindle motor 3 is controlled and driven by a system controller 107 and a servo control circuit 109 to rotate at a predetermined speed.

A signal modulation-demodulation section and ECC block 108 performs modulation and demodulation of a signal and addition of an ECC (error correction code). The optical pickup apparatus 200 illuminates light on a signal recording face of the rotating optical disk 1A in accordance with an instruction of the signal modulation-demodulation and ECC block 108. Recording on or reproduction from the optical disk 1A is performed by such illumination of light.

Further, the optical pickup apparatus 200 detects various kinds of light beams based on a reflected light beam from the signal recording face of the optical disk 1A and supplies signals corresponding to the light beams to a pre-amplification section 120.

The pre-amplification section 120 can produce a focusing error signal, a tracking error signal, an RF signal and so forth based on the signals corresponding to the light beams. Predetermined processes such as demodulation and error correction processes based on the signals are performed by the servo control circuit 109, signal modulation-demodulation and ECC block 108 and so forth.

Consequently, if the demodulated recording signal is, for example, for data storage of a computer, then it is signaled to an external computer 130 or the like through an interface 111. Consequently, the external computer 130 or the like can receive the signal recorded on the optical disk 1A as a reproduction signal.

On the other hand, if the demodulated recording signal is for audio-visual, then it is digital/analog converted by a D/A conversion section of a D/A and A/D converter 112 and supplied to an audio-visual processing section 113. Then, audio-video signal processing is performed by the audio-visual processing section 113, and a resulting signal is signaled to an external image pickup-projection equipment through an audio-visual signal inputting/outputting section 114.

Further, a laser control section 121 controls a light source of the optical pickup apparatus 200, and changes over the light source in accordance with the type of the optical disk and performs an operation of controlling the output power of the light source in a recording mode and a reproduction mode.

Now, details of the arm 5 on which the optical pickup 8 is carried are described.

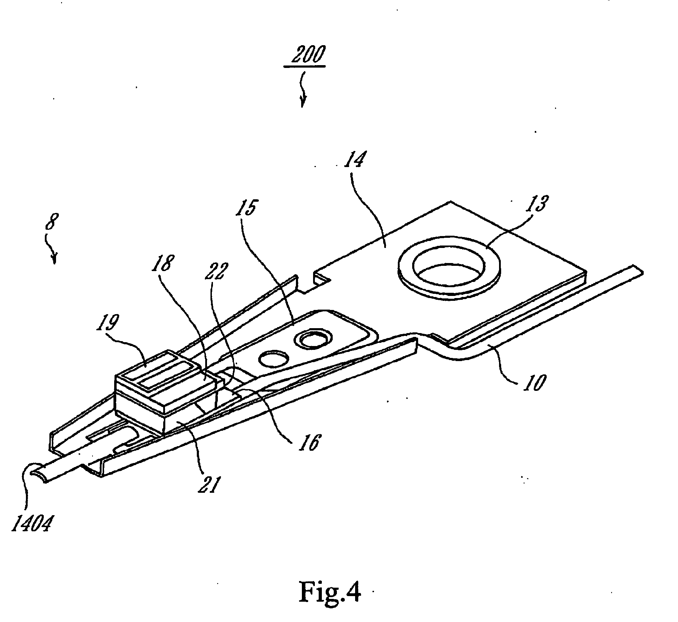

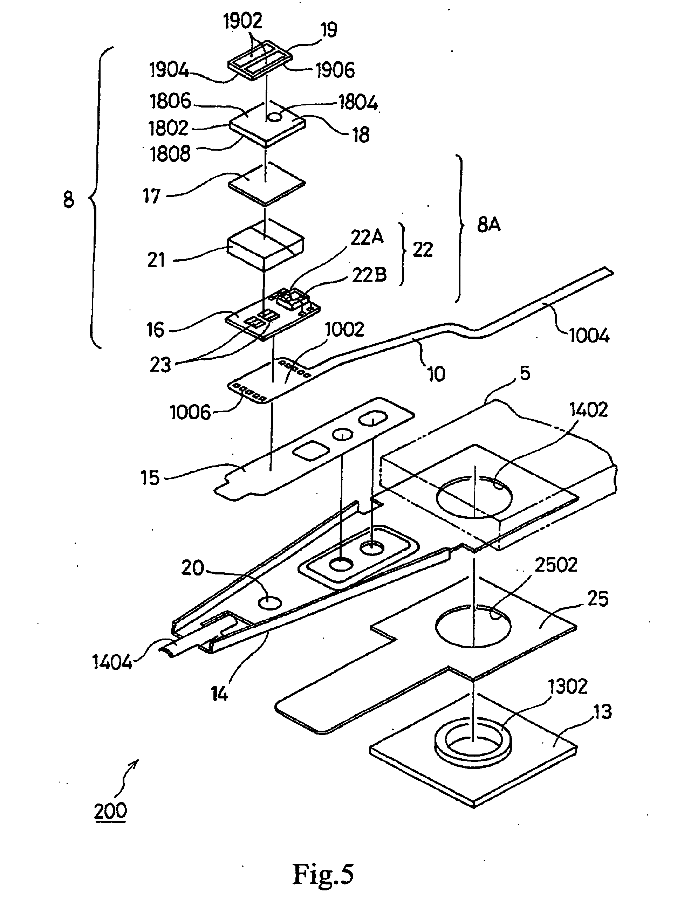

FIG. 4 is a perspective view of the arm 5 on which the optical pickup 8 is carried, and FIG. 5 is an exploded perspective view of the arm 5 on which the optical pickup 8 is carried.

As seen in FIGS. 4 and 5, the optical pickup apparatus 200 includes the arm 5 (shown only in FIG. 3), the voice coil motor 105, the optical pickup 8, a mount 13, a load beam 14, a flexure 15 (corresponding to a support plate in the claims), a piezoelectric element 25 and so forth. The load beam 14, piezoelectric element 25 and mount 13 are placed one on another in this order on the lower face of a tip end portion of the arm 5.

The mount 13 includes has a cylindrical embossed portion 1302 formed on a metal plate of a rectangular shape, and in the state wherein the load beam 14, piezoelectric element 25 and mount 13 are placed one on another in this order on the lower face of the tip end portion of the arm 5, the mount 13 is fitted in the load beam 14 and an attaching hole 2502 of the piezoelectric element 25 and fitted in and secured to a fitting hole of the arm 5.

Consequently, the piezoelectric element 25 is attached to an upper face of the mount 13 and the load beam 14 is attached to an upper face of the piezoelectric element 25 between the arm 5 and the mount 13 such that the mount 13, the load beam 14, and the piezoelectric element 15 turn integrally with the arm 5.

A flexible board 10 is attached to an upper face of the load beam 14 with the flexure 15 interposed therebetween, and the optical pickup 8 is attached to an upper face of the flexible board 10.

The arm 5 is supported at an end in a longitudinal direction thereof for swinging motion within a plane parallel to the recording face of the optical disk 1A on a shaft 6 through a bearing.

Further, the voice coil motor 105 described above is connected to the end in the longitudinal direction of the arm 5.

The piezoelectric element 25 is formed as a plate of a size substantially equal to that of an outer profile of the load beam 14 and has the attaching hole 2502 formed at an end in a longitudinal direction thereof. The piezoelectric element 25 is deformed in the thicknesswise direction thereof when a voltage is applied thereto from a driving circuit not shown. For the piezoelectric element 25, for example, a bimorph type piezoelectric element can be adopted.

The load beam 14 is formed from a thin spring member made of stainless steel and having a thickness of 100 µm or less. An attaching hole 1402 in which the embossed portion 1302 can be fitted is formed in and extends through an end in a longitudinal direction of the load beam 14.

The load beam 14 acts as a leaf spring and is bent in advance so that, when the optical pickup 8 is in a used state, pressing force of 5 gf or less may act upon the optical disk 1A. Thus, as the piezoelectric element 25 is deformed, the pressing force by the load beam 14 can be controlled to increase or decrease.

The flexure 15 is formed from a resiliently deformable support plate which is in the form of a small-width plate and has the optical pickup 8 attached to an end in a longitudinal direction thereof. In the present embodiment, the flexure 15 is a thin rectangular leaf spring made of stainless steel and having a thickness of 50 µm or less.

The flexure 15 is positioned with reference to two holes in the load beam 14 and secured to the other end in the longitudinal direction of the load beam 14 by spot welding.

Further, the flexure 15 exhibits some gap from the load beam 14 except the welded portion thereof secured to the load beam 14 such that it can move in a torsional or bending direction around a dimple portion 20 of the load beam 14 drawn into a spherical shape.

The flexible board 10 is bonded to an upper face of the flexure 15.

The flexible board 10 includes a board body 1002 in the form of a rectangular plate bonded to the upper face of the flexure 15 and a connection portion 1004 in the form of a band plate extending from the board body 1002. A plurality of land portions (conductor exposing portions) 1006 are formed on an upper face of the board body 1002.

The optical pickup 8 is attached to a location of the flexure 15 opposing to the optical disk 1A through the substrate body 1002 of the flexible board 10 such that the pressing force of the load beam 14 is transmitted to the optical pickup 8 through the dimple portion 20.

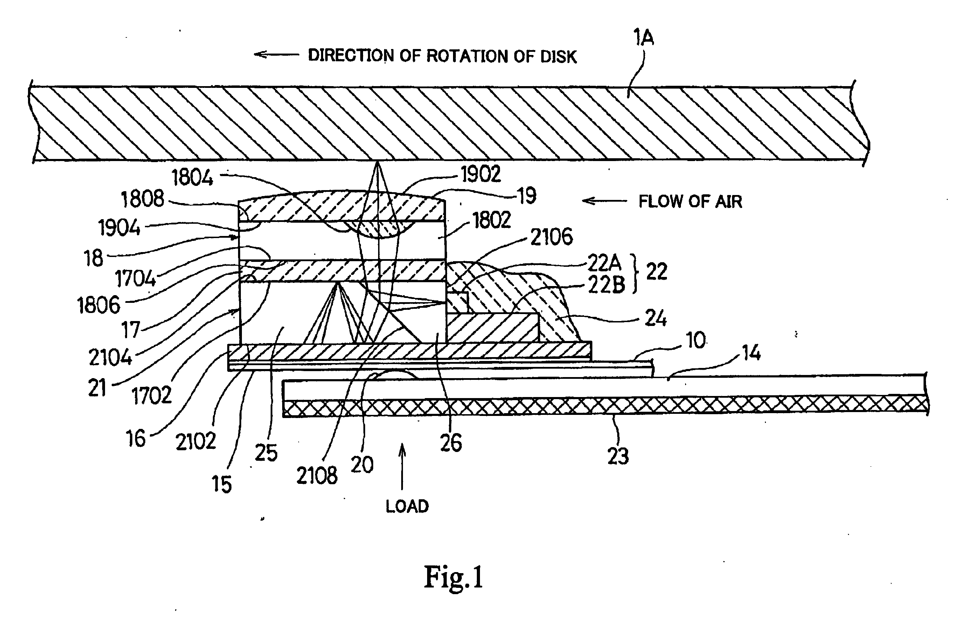

As shown in FIG. 1, the optical pickup 8 includes a substrate 16, a light source 22 attached to the substrate 16, a light receiving element 23 (shown only in FIG. 5) attached to the substrate 16, an optical pickup body 8A having a polarizing beam splitter 21 and a quarter-wave plate 17 attached to the substrate 16, an objective lens plate 18 attached to the optical pickup body 8A, and a slider 19.

The substrate 16 is formed as a rectangular plate from a silicon wafer and includes an electric circuit (not shown) for processing a detection signal from the light receiving element 23 and so forth. The substrate 16 has a plurality of electric terminals (not shown) provided thereon such that they extend in the thicknesswise direction therethrough.

The substrate 16 is fixedly adhered at a lower face thereof to the flexure 15 with the board body 1002 of the flexible board 10 interposed therebetween such that the electric terminals thereon are connected to the land portions 1006 of the flexible board 10. Consequently, the substrate 16 inputs and outputs electric signals to and from the electric circuit board 11 through the flexible board 10.

The light receiving element 23 is attached to a middle location in the widthwise direction rather near to one end in the longitudinal direction of the substrate 16 on the upper face of the substrate 16 such that it faces upwardly.

The polarizing beam splitter 21 is formed from low refractive index glass 26 having a refractive index of 1.5 or less and high refractive index glass 27 having another refractive index of 1.8 or more and joined to the low refractive index glass 26. The polarizing beam splitter 21 has a rectangular bottom face 2102, a top face 2104 opposing in a spaced relationship to the bottom face 2102, and four side faces perpendicular to the bottom face 2102 and the top face 2104. One 2106 of the four side faces forms an incoming face into which a light beam which is emitted light from the light source 22 is introduced.

A polarizing face 2108 having polarization anisotropy is formed from mating faces of the low refractive index glass 26 and the high refractive index glass 27.

The polarizing beam splitter 21 is secured by a bonding agent or the like in such a condition that the side face 2106 is directed to the other direction of the lengthwise direction of the substrate 16 and the bottom face 2102 contacts closely with the upper face of the substrate 16 and the light receiving element 23 without any gap left therebetween.

The quarter-wave plate 17 is formed as a rectangular plate having a length and a width equal to those of the polarizing beam splitter 21. The quarter-wave plate 17 is attached to the polarizing beam splitter 21 by bonding or the like while it is in a state wherein a lower face 1702 contacts with the top face 2104 without a gap left therebetween such that the lengthwise directions and the widthwise directions of them coincide with each other.

It is to be noted that, in the present embodiment, the optical member in the claims is composed of the polarizing beam splitter 21 and the quarter-wave plate 17.

The objective lens plate 18 includes a plate 1802 of glass formed as a rectangular plate having a length and a width equal to those of the quarter-wave plate 17 and a objective lens 1804 (hereinafter referred to as objective lens) made of a high refractive index and incorporated in the glass plate 1802.

The objective lens plate 18 is attached to the quarter-wave plate 17 by bonding or the like while it is in a state wherein a lower face 1806 contacts with an upper face 1074 without a gap left therebetween such that the lengthwise directions and the widthwise directions of them coincide with each other.

The slider 19 is formed as a rectangular plate having a length, a width and a thickness and is made of a material through which light can pass, for example, a glass material, having a thinness of 50 µm or more. In the present embodiment, the slider 19 is formed such that the widthwise dimension thereof is smaller than the dimension of the objective lens plate 18 in the widthwise direction.

A plurality of rails are provided on the upper face side of the slider 19 such that they extend linearly along the lengthwise direction of the slider 19. A rail face 1902 which forms an air bearing surface (ABS) extending in parallel to an upper face of the slider 19 is formed on the top face of each of the rails. Each of the rails is formed by etching, and the rail face 1902 is formed by spherical polishing with a radius of approximately 1 to 10 m. The slider 19 has a function similar to a floating head slider of an HDD and generates levitation force by air using the rail face 1902 to form an air film between the rail face 1902 and the disk.

An attaching face 1904 is formed on a lower face of the slider 19 opposite to the upper face on which the rail face 1902 is formed, and is formed from a flat face extending in parallel to the rail face 1902.

The slider 19 is attached by bonding the attaching faces 1808 and 1904 to each other in a state wherein the attaching face 1904 is placed on the attaching face 1808 formed from the top face of the objective lens plate 18.

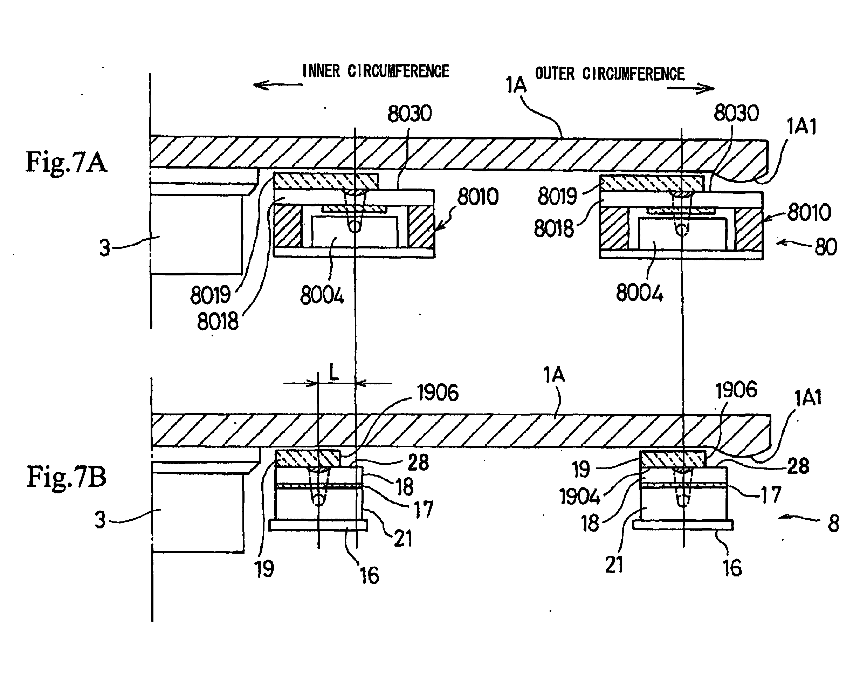

In the present embodiment, as seen in FIG. 7B, the attachment of the slider 19 to the objective lens plate 18 is performed in a state wherein the center of the slider 19 in the widthwise direction is displaced in an inner circumference direction of the optical disk 1A with respect to the center of the objective lens plate 18 in the widthwise direction. Consequently, an offset 28 displaced in a direction spaced away from the recording face of the optical disk 1A is formed by the attaching face 1808 of the objective lens plate 18 and an edge 1906 of the slider 19 in the widthwise direction.

The light source 22 includes a semiconductor laser 22A (corresponding to the light emitting element in the claims) formed as a rectangular plate for emitting the light beam and a mount member 22B formed as a rectangular plate greater than the semiconductor laser 22A. The semiconductor laser 22A and a photo-detector (not shown) for monitoring the light beam of the semiconductor laser 22A are mounted on an upper face of the mount member 22B.

The semiconductor laser 22A emits the light beam from a light emitting face provided at a place on one end face in the lengthwise direction and emits a monitoring light beam from the rear face opposing to the emitting face.

The semiconductor laser 22A is attached to the upper face of the mount member 22B in a state wherein the light emitting face coincides with the front face of the mount member 22B and the center of the semiconductor laser 22A in the widthwise direction coincides with the center of the upper face of the mount member 22B in the widthwise direction. In this state, the monitoring light beam emitted from the rear face of the semiconductor laser 22A is received by the monitoring photo-detector.

The attachment of the light source 22 to the substrate 16 is performed such that the lower face of the mount member 22B is bonded to the upper face of the substrate 16 by bonding agent or the like so that a condition wherein the emitting face of the semiconductor laser 22A and the front face of the mount member 22B contact closely with the place of the side face 2106 without a gap left therebetween.

Meanwhile, the connection terminals for driving signal inputting provided on the semiconductor laser 22A and the connection terminals for detection signal outputting provided on the photo-detector of the mount member 22B are connected to the electric terminals provided on the substrate 16 individually by connection lines (wires).

The surfaces of the semiconductor laser 22A, the photo-detector and the mount member 22B exposed to the outside, the connection terminals, and portions of the electric terminals and portions of the connection lines exposed upwardly of the substrate 16 in a state wherein the lower face of the mount member 22B of the light source 22 is attached to the substrate 16 and the light emitting face of the semiconductor laser 22A and the front face of the mount member 22B are attached to the side face 2106 of the polarizing beam splitter 21 are covered with an anticorrosion element 24.

The anticorrosion element 24 is formed from a material which is transparent so that the light beam can pass therethrough and has an electric insulating property, for example, a synthetic resin material such as an acrylic resin material.

Consequently, the surfaces of the semiconductor laser 22A, the photo-detector and the mount member 22B exposed to the outside, the connection terminals, and the portions of the electric terminals and the portions of the connection lines exposed upwardly of the substrate 16 are blocked from the external air.

The reason why the anticorrosion element 24 is formed from a material which is transparent so that the light beam can pass therethrough and has an electric insulating property is that it is intended firstly to prevent the anticorrosion element 24 from disturbing the light beam emitted from the semiconductor laser 22A of the light source 22 from being received by the photo-detector of the mount member 22B and secondly to prevent short-circuiting of the electric terminals, connection terminals and connection lines therebetween.

Now, operation of the optical pickup apparatus of the first embodiment is described with reference to FIG. 1.

The light beam in the form of a linearly polarized light beam emitted from the semiconductor laser 22A of the light source 22 is reflected upwardly in FIG. 1, that is, toward the optical disk 1A, by the polarizing face 2108 of the polarizing beam splitter 21 having polarization anisotropy The light beam thereafter changes from linearly polarized light into circularly polarized light when it passes through the quarter-wave plate 17. Then, the light beam is condensed by the objective lens 1804, passes through the portion of the slider 19 in the thicknesswise direction and is focused on the recording face of the optical disk 1A.

The light beam (reflected light) reflected from the recording face of the optical disk 1A returns along a light path similar to the forwardly advancing path and is condensed by the objective lens 1804 again. Thereafter, the light beam changes from circularly polarized light back into linearly polarized light when it passes the quarter-wave plate 17 again.

Here, the resulting linear polarized light is light linearly polarized in the perpendicular direction to the polarization direction of the polarized light in the former forwardly advancing path, and therefore has a polarization direction with which the linearly polarized light passes through the polarizing face 2108 of the polarizing beam splitter 21.

Accordingly, the light beam passing through the polarizing face 2108 is refracted, and part of the light beam passes through the half mirror face formed from the bottom face 2102 of the polarizing beam splitter 21 and is received by the light receiving element 23 of the substrate 16. Meanwhile, part of the light beam reflected by the half mirror face is then reflected by a totally reflecting face formed from the top face 2104 of the polarizing beam splitter 21 again and is then projected on the light receiving element 23 again.

This optical system is designed so that, when it is focused just on the recording face of the optical disk 1A, the focus is positioned on the totally reflecting face of the polarizing beam splitter 21, and when the focus is positioned just on the recording face of the disk, two spots of light projected on the photo-detector have an equal size.

Each of the photo-detectors is divided into a plurality of regions so that they can be used also for detection of focusing and tracking errors.

Incidentally, the error detection methods used in the present invention are the spot size method for focusing and the push-pull method for tracking.

Focusing servo in the optical pickup apparatus 200 is performed by deflection follow-up of the recording face of the disk so that it may be same as that of a floating slider adopted popularly in an HDD.

In particular, when the optical disk 1A rotates, also the air in the proximity of the optical disk 1A rotates and enters between the slider 19 and the optical disk 1A.

The slider 19 acquires floating face from a pressure by the air and keeps a fixed floating amount where the floating force balances just with the load by the load beam 14. In the present embodiment, the slider 19 is designed so as to have a floating amount of approximately 1 µm.

However, the floating amount is fluctuated by a variation of the linear velocity of the disk and an angular displacement of the slider 19 with respect to a track on the recording face of the optical disk 1A.

A configuration wherein the linear velocity of the disk is constant (CLV: Constant Linear Velocity) and the optical pickup 8 is driven linearly along a radial direction of the optical disk 1A can be used as it is.

However, a problem occurs with another configuration wherein the disk is used in a condition that the number of rotations is constant (CAV: Constant Angular Velocity) or the optical pickup is driven by a swing arm.

Therefore, in the present embodiment, the piezoelectric element 25 is driven to adjust the load by the load beam 14 so that the floating amount may be fixed.

Accordingly, whichever one of the CLV and the CAV is used for the speed of rotation of the disk or whichever one of linear driving and rotational driving is used for the optical pickup 8, the floating amount can be maintained fixed.

Meanwhile, the tracking servo is performed by swinging the arm 5 by means of the voice coil motor 105 so as to follow up the error detection signal.

Further, when the optical disk 1A is not within the optical disk apparatus 100 or when the spindle motor 3 is at rest, the optical pickup 8 is positioned at a place outwardly of an outer circumference of the optical disk 1A as seen in FIG. 3. Thereupon, an engaging portion 1404 provided at the other end of the load beam 14 is engaged with a spring holding down member 9 provided on the optical pickup 8 to control the optical pickup 8 to be positioned at a place spaced away from the recording face of the optical disk 1A in the thicknesswise direction of the optical disk 1A.

Accordingly, according to the first embodiment, the optical member formed from the polarizing beam splitter 21 and the quarter-wave plate 17 is provided in a condition wherein they closely contact with the light source 22, objective lens 1804 and light receiving element 23 without a gap left therebetween.

Consequently, there is no necessity to provide a package for preventing sticking of dust between the optical member and the light source 22 and between the optical member and the light receiving element 23, and this is advantageous in miniaturization of the outer profile of the optical pickup 8. This is advantageous also in improvement of the follow-up performance of the optical pickup 8 to the surface deflection of the disk.

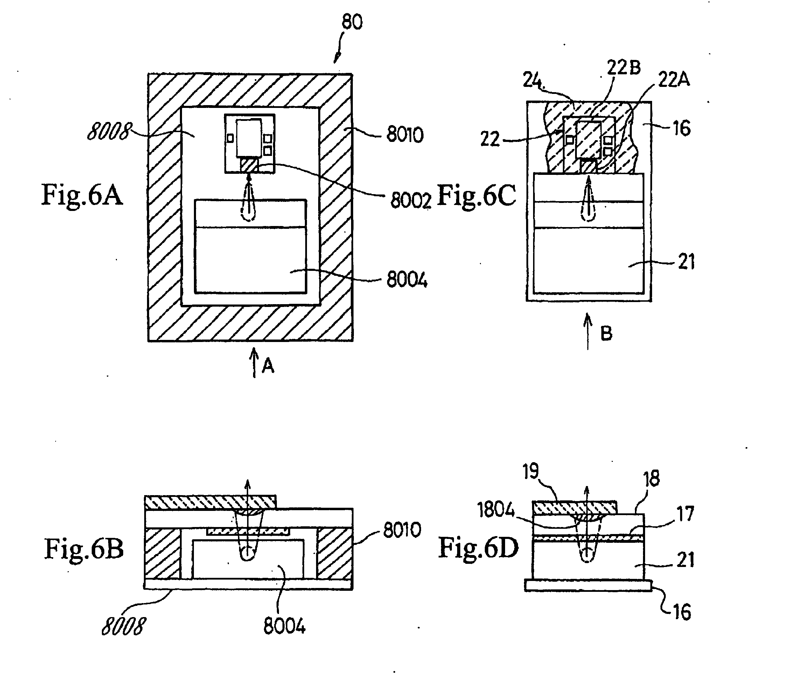

Here, comparison between the prior art example and the present invention is performed with reference to FIGS. 6A to 6D. As seen in FIGS. 6A and 6B, the conventional optical pickup 80 has a large outer profile because a semiconductor laser 8002, a polarizing beam splitter 8004, a silicon wafer 8008 and so forth are accommodated in a single package 8010.

In contrast, as seen in FIGS. 6C and 6D, according to the present embodiment, since the optical pickup does not have such a package as described above, it can achieve reduction in size and weight significantly in comparison with the conventional optical pickup.

Further, since the optical pickup 8 is configured such that, upon recording or reproduction by the optical pickup 8, the attaching face 1904 of the slider 19 to the objective lens may have a height greater than that of a swollen portion 1A1 formed on the outer circumference of the optical disk 1A as shown in FIGS. 7A and 7B, naturally the optical pickup 8 can be moved outwardly in a radial direction of the recording face of the optical disk 1A until the offset 28 overlaps with the swollen portion 1A1 formed on the outer periphery of the optical disk 1A similarly to the conventional optical pickup. In FIG. 7A, reference numeral 8018 denotes an object lens plate, 8019 a slider, and 8030 an offset. It is to be noted that the swollen portion 1A1 is formed from a portion of a UV film for protection applied by spin coating.

However, since the optical pickup 8 of the present embodiment can be reduced in the dimension in the widthwise direction, that is, in the diametrical dimension of the optical disk 1A, when compared with the conventional optical pickup 80, it is possible to move the optical pickup 8 to a position nearer to the location of the spindle motor 3 positioned on the inner circumference side of the optical disk 1A. In other words, the optical pickup 8 of the present embodiment is advantageous in increase of the disk capacity because it can be positioned on the more inner side in a radial direction when compared with the optical pickup 80.

Further, since the surface of the light source 22, the photo-detector, the connection terminals, and the portions of the electric terminals and the portions of the connection lines are blocked from the external air by the anticorrosion element 24, corrosion of the light source 22 and the connection terminals therefor, the electric terminals and the connection lines can be prevented, and this is advantageous in increase of the like of the optical pickup apparatus 200.

Further, since the anticorrosion element 24 is formed as a transparent element, the light beam emitted from the semiconductor laser 22A of the light source 22 is not blocked from being received by the photo-detector of the mount member 22B.

Now, a second embodiment is described.

The second embodiment is different from the first embodiment in the configuration of the load beam 14 and the flexure 15.

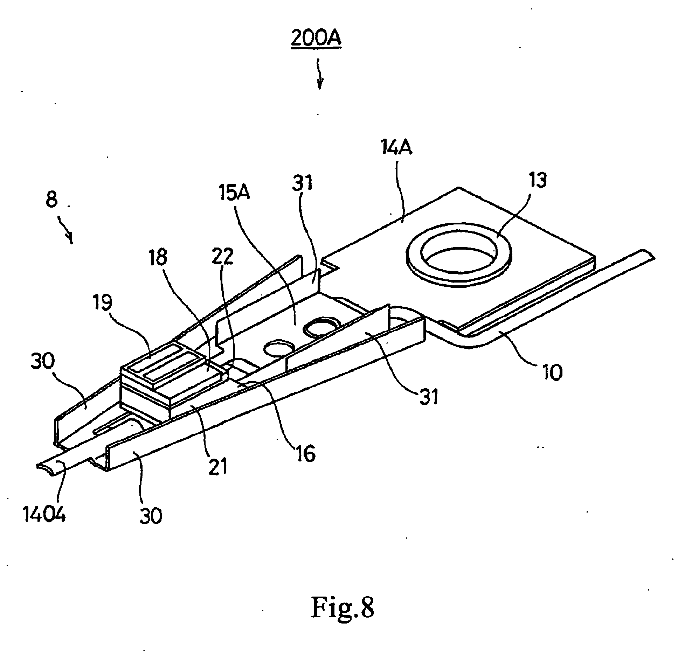

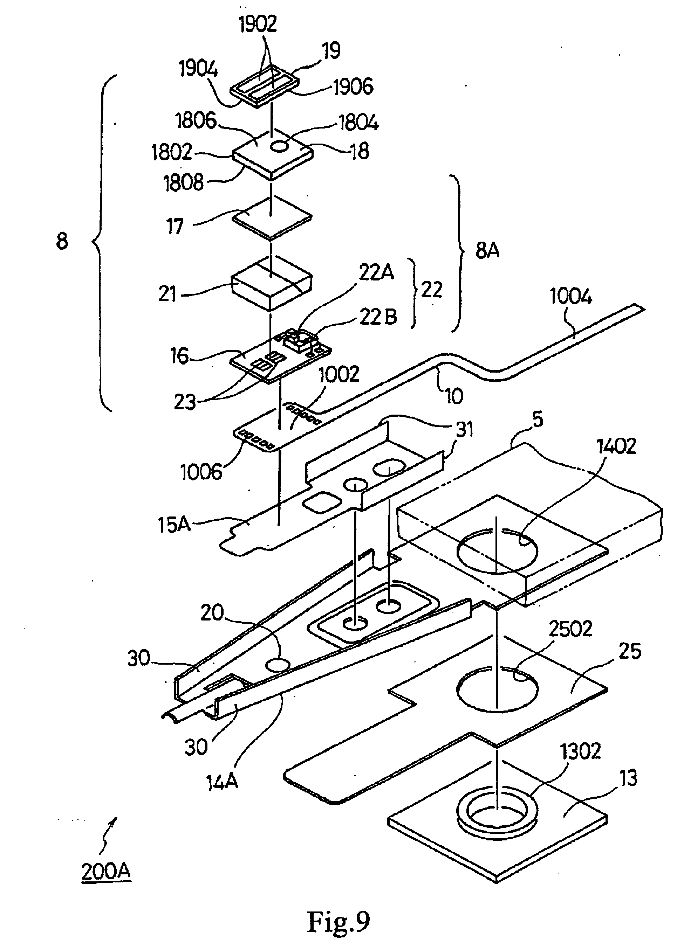

FIG. 8 is a perspective view of an arm 5 on which an optical pickup 8 of the second embodiment is carried, and FIG. 9 is an exploded perspective view of the arm 5 on which the optical pickup 8 of the second embodiment is carried.

In the following, like element to those of the first embodiment are denoted by like reference characters and description thereof is omitted, but only differences from the first embodiment are described.

In the second embodiment, an optical pickup apparatus 200A includes such a voice coil motor 105, an optical pickup body 8A, a mount 13, a load beam 14A, a flexure 15A, a piezoelectric element 25 and so forth as described hereinabove similarly to the optical pickup apparatus 200. The load beam 14A, piezoelectric element 25 and mount 13 are placed one on another in this order on a lower face at an end portion of the arm 5.

The load beam 14A is formed so as to be resiliently deformable and have a thermal conductivity and a heat radiating property, and in the present embodiment, it is formed from a thin spring material made of copper and having a thickness of 100 µm or less or a thin spring material made of iron and having a thickness of 100 µm with a plated layer applied thereto. The load beam 14A has an attaching hole 1402 formed to extend therethrough at an end in the longitudinal direction thereof such that an embossed portion 1302 described hereinabove can pass through the same. A pair of fins 30 for heat radiation are formed uprightly on the opposite sides of the load beam 14A in the widthwise direction perpendicular to the longitudinal direction and extend in a direction in which they approach the recording face of the optical disk 1A.

The flexure 15A is a support plate of a small width so that it may be resiliently deformable and have a thermal conductance and a heat radiating property. In the present embodiment, the flexure 15 is formed from a thin spring material made of copper and having a thickness of 50 µm or less or a thin spring material made of iron and having a thickness of 100 µm with a plated layer applied thereto. The optical pickup is attached to an end of the flexure 15A in its lengthwise direction.

A pair of fins 31 for heat radiation are formed from one end to an intermediate position in the longitudinal direction of the flexure 15A on the opposite sides of the flexure 15A in the widthwise direction perpendicular to the longitudinal direction. The fins 31 are formed uprightly in a direction in which they approach the recording face of the optical disk 1A.

The flexure 15A is positioned with reference to two holes of the load beam 14A and secured to the other end of the load beam 14A in the longitudinal direction by spot welding.

Further, the flexure 15A has some gap with respect to the load beam 14 except at the welded portion thereof secured to the load beam 14A and is movable in a torsional direction or a bending direction around a dimple portion 20 of the load beam 14A drawn into a spherical shape.

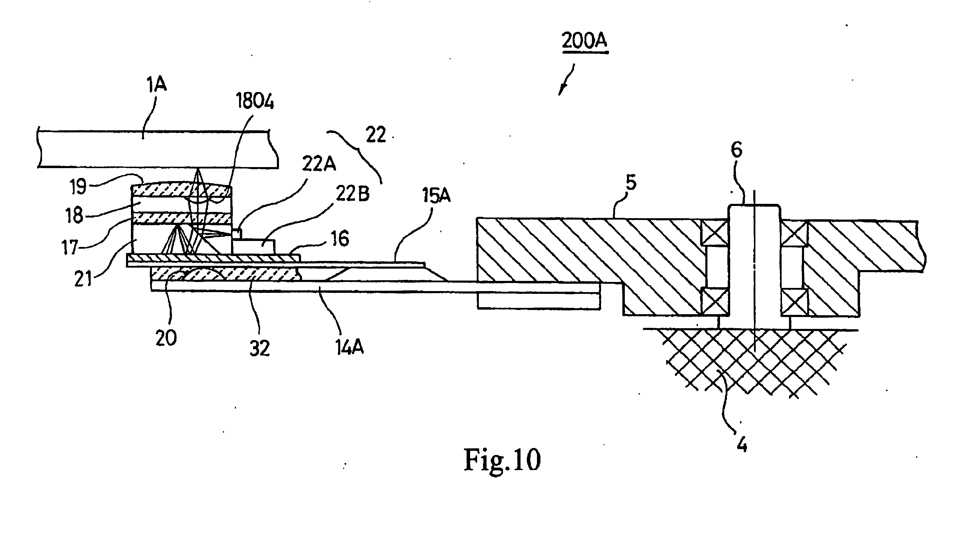

Further, the gap formed between the flexure 15A and the load beam 14A is filled up with silicon grease 32 (FIG. 10) which has a superior thermal conductivity.

According to the optical pickup apparatus 200A of the second embodiment configured in such a manner as described above, as seen from FIG. 10, heat generated in the semiconductor laser 22A of the optical pickup 8 is transmitted along a route of the mount member 22B, substrate 16, flexure 15A, silicon grease 32 and load beam 14A and radiated from the flexure 15A and fins 31 and the load beam 14A and fins 30.

Accordingly, since the flexure 15A and the load beam 14A are each formed from a thin spring member made of copper or a thin spring member made of iron and having a plated copper layer formed thereon, it has a high thermal conductivity, and consequently, the heat of the semiconductor laser 22A can be transmitted and radiated rapidly.

Further, since the fins 31 and 30 are provided, the surface area of the flexure 15A and the load beam 14A can be increased, which is advantageous in improvement in the heat radiation characteristic. Further, since air flows generated by rotation of the optical disk 1A hit the fins 31 and 30, the heat radiation property can be further raised.

Further, since the silicon grease 32 is filled in the gap between the flexure 15A and the load beam 14A, the conductivity of heat from the flexure 15A to the load beam 14A can be raised by the silicon grease 32.

Accordingly, since heat generated by the light source 22 can be radiated effectively, the life of the light source 22 is increased and deterioration of the reading/writing characteristics by wavelength fluctuation can be suppressed advantageously.

Here, the thermal conductivities of the individual materials are described.
Air: 0.024 W/m°C
Iron: 83.5 W/m°C
Copper: 403 W/m°C
Silicon grease: 1 ~ 3 W/m°C
Aluminum: 236 W/m°C
Magnesium: 156 W/m°C

From the values of the thermal conductivity, it can be recognized that the heat conductivity of copper is as high as approximately 5 times that of iron and it is advantageous to form the flexure 15A and the load beam 14A from copper or from iron plated with copper in order to raise the thermal conductivity and the heat radiating property.

Also it can be recognized that the thermal conductivity of silicon grease is as high as approximately 40 times or more that of the air and it is advantageous to fill the silicon grease 32 into the gap between the flexure 15A and the load beam 14A in order to raise the thermal conductivity.

On the other hand, where it takes precedence to raise the thermal conductivity of the flexure 15A and the load beam 14A, each of them should be formed from a spring member having a high thermal conductivity, but where the rigidity of the flexure 15A and the load beam 14A takes precedence, each of them should be formed from a spring member made of iron superior in rigidity and having a plated layer of copper thereon.

It is to be noted that, although it is described that the optical pickup apparatus 200A of the second embodiment shown in FIGS. 7 and 8 includes the optical pickup 8 having a same configuration as that in the first embodiment, the optical pickup apparatus 200A of the second embodiment is not limited to this, but the configuration of the optical pickup can be applied to various other optical pickups.

Further, the optical pickup apparatus and the optical disk apparatus of the present invention are not limited to those which perform both of recording and reproduction, but can be applied to those which perform at least one of recording and reproduction.

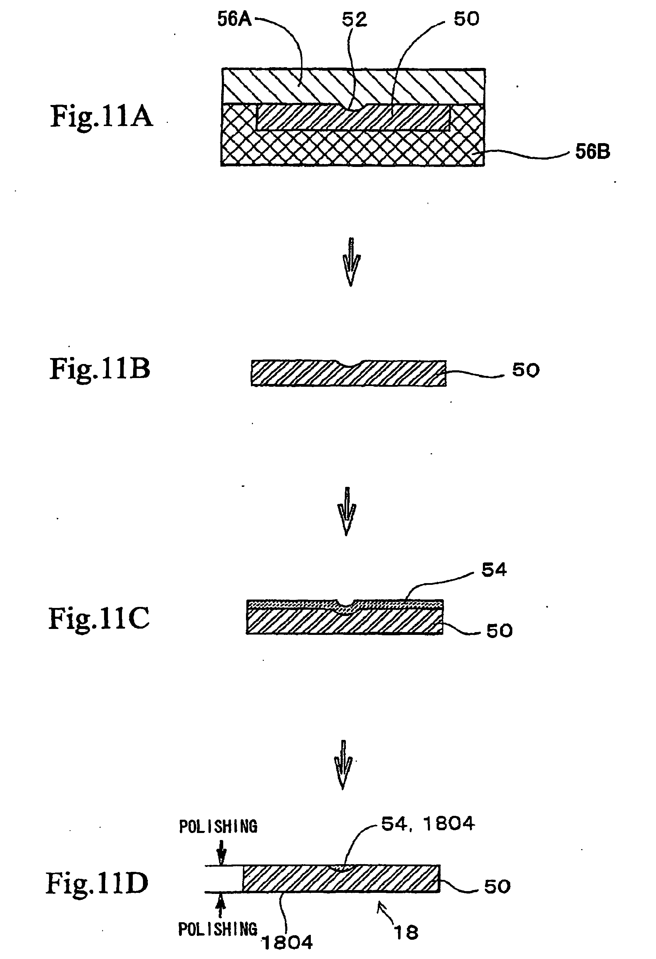

Finally, a method of producing the objective lens plate 18 in the optical pickup apparatus 200 and 200A of the first and second embodiments is described with reference to FIGS. 11A to 11D.

As seen in FIGS. 11A and 11B, similarly as in popular production of a lens by glass molding, a molded glass 50 having a recess 52 formed thereon is molded using upper and lower metal molds 56A and 56B. When it is tried to produce a small-size mold lens, conventionally there is a limitation in size of a cutting tool for working a metal mold, and this is a restriction to miniaturization of a small-size lens. This restricts miniaturization.

Here, however, the metal mold A has a convex formation so that it may be less likely to be restricted by the size of a cutting tool for metal mold working, and consequently, a small-size lens can be produced.

Then, a material 54 made of niobium oxide or the like having a higher refractive index than that of the molded glass 50 is formed on the molded glass 50 in thickness of covering the recess 52 of the molded glass 50 as shown in FIG. 11C, by sputtering.

Thereafter, polishing of the molded glass 50 is performed until high refractive index material 54 remains only in the recess 52 of the glass as seen in FIG. 11D. The high refractive index portion produced in such a manner as described above functions as a convex lens with respect to light which passes through the glass surface and thereby forms the objective lens 1804 described hereinabove.

It is to be noted that, in the present example, the refractive index of the molded glass 50 is approximately 1.5, and the refractive index of the high refractive index material 54 is 2 or more.

### Industrial Applicability

As described above, according to the present invention, an optical pickup apparatus and an optical disk apparatus which are advantageous in miniaturization can be provided.

Further, according to the present invention, an optical pickup apparatus and an optical disk apparatus which are advantageous in improvement of the heat radiation property can be provided.

## Claims

1. An optical pickup apparatus comprising:
an optical pickup including an optical pickup body having a substrate, a light source attached to said substrate, a light receiving element attached to said substrate and an optical member attached to said substrate, and an objective lens and a slider attached to said optical pickup body, wherein
said optical pickup is configured such that said slider is opposed to a recording face of an optical disk and said optical pickup is levitated along a thicknesswise direction of the optical disk by an air flow formed between said slider and the recoding face,
said optical member is configured such that a light beam emitted from said light source is illuminated on the recording face through said objective lens and the reflected light beam reflected by the recording face is received by said light receiving element through said objective lens, and
said optical member is provided in a state wherein said optical member closely contacts with said light source, objective lens and light receiving element without a gap left therebetween.

2. The optical pickup apparatus according to claim 1 wherein, said optical member is in the form of a rectangular plate and is attached at one of two mutually opposing faces thereof to said substrate while said objective lens is attached to the other of the two mutually opposing faces of said optical member, and said light source is attached to a face of said optical member perpendicular to the one face and the other face.

3. The optical pickup apparatus according to claim 1 wherein, said light source is attached to said substrate, and a surface of said light source which is exposed to the outside while said light source is attached to said optical member is covered with anticorrosion means for blocking the surface from the external air.

4. The optical pickup apparatus according to claim 3, wherein said anticorrosion means is made of a synthetic resin material.

5. The optical pickup apparatus according to claim 3 wherein, said light source includes a light emitting element for emitting the light beam, a photo-detector for monitoring the light beam emitted from said light emitting element, and a mount member attached to said substrate and having said light emitting element and said photo-detector mounted thereon, that surfaces of said light emitting element, photo-detector and mount member which are exposed to the outside while said mount member is attached at a lower face thereof to said substrate and the light emitting face of said light emitting element and a front face of said mount member are attached to said optical member are covered with said anticorrosion means, and that said anticorrosion means is formed from a transparent synthetic resin material through which the light beam emitted from said light emitting element can pass.

6. The optical pickup apparatus according to claim 5 wherein, connection terminals for inputting a driving signal are provided on said light emitting element while electric terminals for relaying the driving signal are provided on said substrate, and said connection terminals and said electric terminals are covered wit said anticorrosion means.

7. The optical pickup apparatus according to claim 1 wherein, said objective lens is provided integrally with an objective lens plate, and said objective lens plate is attached at one face thereof to said optical pickup body while said slider is attached to the other face of said objective lens plate.

8. The optical pickup apparatus according to claim 1 wherein, said optical pickup apparatus comprises a resiliently deformable support plate in the form of a small-width plate having said optical pickup attached to an end in a longitudinal direction thereof, and said support plate has a thermal conductivity and a heat radiating property.

9. The optical pickup apparatus according to claim 8 wherein, said support plate has a heat radiating fin provided thereon in a projecting manner in a direction in which said radiating fin approaches the recording face.

10. The optical pickup apparatus according to claim 8 wherein, said support plate is made of a material of copper or iron which has copper plated thereon.

11. The optical pickup apparatus according to claim 8 wherein, said optical pickup apparatus further comprises a resiliently deformable load beam in the form of a small-width plate having said support plate attached to one end in a longitudinal direction thereof, and said load beam transmits and radiates heat from said light source rapidly.

12. The optical pickup apparatus according to claim 11 wherein, said load beam has a heat radiating fin provided in a projecting manner in a direction in which said load beam approaches the recording face.

13. The optical pickup apparatus according to claim 11 wherein, said load beam is made of a material of copper or iron which has copper plated thereon.

14. The optical pickup apparatus according to claim 11 wherein, a gap is formed between said support plate and said load beam and filled with grease for transmission of heat.

15. An optical disk apparatus comprising:
driving means for holding and driving an optical disk to rotate; and
an optical pickup apparatus for illuminating light on the optical disk driven to rotate by said driving section and detecting reflected light from the optical disk;
said optical pickup apparatus including:
an optical pickup having an optical pickup body having a substrate, a light source attached to said substrate, a light receiving element attached to said substrate and an optical member attached to said substrate, and an objective lens and a slider attached to said optical pickup body,
wherein said optical pickup being configured such that said slider is opposed to a recording face of an optical disk and said optical pickup is levitated along a thicknesswise direction of the optical disk by an air flow formed between said slider and the recoding face,
said optical member being configured such that a light beam emitted from said light source is illuminated on the recording face through said objective lens and the reflected light beam reflected by the recording face is received by said light receiving element through said objective lens, and
said optical member is provided in a state wherein said optical member closely contacts with said light source, objective lens and light receiving element without a gap left therebetween.

16. The optical disk apparatus according to claim 15 wherein, said optical member is in the form of a rectangular plate and is attached at one of two mutually opposing faces thereof to said substrate while said objective lens is attached to the other of the two mutually opposing faces of said optical member, and said light source is attached to a face of said optical member perpendicular to the one face and the other face.

17. The optical disk apparatus according to claim 15 wherein, said light source is attached to said substrate, and a surface of said light source which is exposed to the outside while said light source is attached to said optical member is covered with anticorrosion means for blocking the surface from the external air.

18. The optical disk apparatus according to claim 17 wherein, said anticorrosion means is made of a synthetic resin material.

19. The optical disk apparatus according to claim 17 wherein, said light source includes a light emitting element for emitting the light beam, a photo-detector for monitoring the light beam emitted from said light emitting element, and a mount member attached to said substrate and having said light emitting element and said photo-detector mounted thereon, that surfaces of said light emitting element, photo-detector and mount member which are exposed to the outside while said mount member is attached at a lower face thereof to said substrate and the light emitting face of said light emitting element and a front face of said mount member are attached to said optical member are covered with said anticorrosion means, and that said anticorrosion means is formed from a transparent synthetic resin material through which the light beam emitted from said light emitting element can pass.

20. The optical disk apparatus according to claim 19 wherein, connection terminals for inputting a driving signal are provided on said light emitting element while electric terminals for relaying the driving signal are provided on said substrate, and said connection terminals and said electric terminals are covered with said anticorrosion means.

21. The optical disk apparatus according to claim 15 wherein, said objective lens is provided integrally with an objective lens plate, and said objective lens plate is attached at one face thereof to said optical pickup body while said slider is attached to the other face of said objective lens plate.

22. The optical disk apparatus according to claim 15 wherein, said optical pickup apparatus comprises a resiliently deformable support plate in the form of a small-width plate having said optical pickup attached to an end in a longitudinal direction thereof, and said support plate has a thermal conductivity and a heat radiating property.

23. The optical disk apparatus according to claim 22 wherein, said support plate has a heat radiating fin provided thereon in a projecting manner in a direction in which said radiating fin approaches the recording face.

24. The optical disk apparatus according to claim 22 wherein, said support plate is made of a material of copper or iron which has copper plated thereon.

25. The optical disk apparatus according to claim 22 wherein, said optical pickup apparatus further comprises a resiliently deformable load beam in the form of a small-width plate having said support plate attached to one end in a longitudinal direction thereof, and said load beam transmits and radiates heat from said light source rapidly.

26. The optical disk apparatus according to claim 25 wherein, said load beam has a heat radiating fin provided in a projecting manner in a direction in which said load beam approaches the recording face.

27. The optical disk apparatus according to claim 25 wherein, said load beam is made of a material of copper or iron which has copper plated thereon.

28. The optical disk apparatus according to claim 25 wherein, a gap is formed between said support plate and said load beam and filled with grease for transmission of heat.

29. An optical pickup apparatus comprising:
an optical pickup including an optical pickup body having a substrate, a light source attached to said substrate, a light receiving element attached to said substrate and an optical member attached to said substrate, and an objective lens and a slider attached to said optical pickup body; and
a resiliently deformable support plate in the form of a small-width plate having said optical pickup attached to an end in a longitudinal direction thereof; wherein
said optical pickup is configured such that said slider is opposed to a recording face of an optical disk and said optical pickup is levitated following up the recording face of the optical disk by an air flow formed between said slider and the recoding face, and
said support plate has a thermal conductivity and a heat radiating property.

30. The optical pickup apparatus according to claim 29 wherein, said support plate has a heat radiating fin provided thereon in a projecting manner in a direction in which said radiating fin approaches the recording face.

31. The optical pickup apparatus according to claim 29 wherein, said support plate is made of a material of copper or iron which has copper plated thereon.

32. The optical pickup apparatus according to claim 29, wherein said optical pickup apparatus further comprises a resiliently deformable load beam in the form of a small-width plate having said support plate attached to one end in a longitudinal direction thereof, and said load beam transmits and radiates heat from said light source rapidly.

33. The optical pickup apparatus according to claim 32 wherein, said load beam has a heat radiating fin provided in a projecting manner in a direction in which said load beam approaches the recording face.

34. The optical pickup apparatus according to claim 32 wherein, said load beam is made of a material of copper or iron which has copper plated thereon.

35. The optical pickup apparatus according to claim 32 wherein, a gap is formed between said support plate and said load beam and filled with grease for transmission of heat.

36. An optical disk apparatus comprising:
driving means for holding and driving an optical disk to rotate; and
an optical pickup apparatus for illuminating light on the optical disk driven to rotate by said driving means and detecting rejected light from the optical disk;
said optical pickup apparatus including:
an optical pickup including an optical pickup body having a substrate, a light source attached to said substrate, a light receiving element attached to said substrate and an optical member attached to said substrate, and an objective lens and a slider attached to said optical pickup body, and
a resiliently deformable support plate in the form of a small-width plate having said optical pickup attached to an end in a longitudinal direction thereof, wherein
said optical pickup being configured such that said slider is opposed to a recording face of an optical disk and said optical pickup is levitated following up the recording face of the optical disk by an air flow formed between said slider and the recoding face, and
said support plate has a thermal conductivity and a heat radiating property.

37. The optical disk apparatus according to claim 36 wherein, said support plate has a heat radiating fin provided thereon in a projecting manner in a direction in which said radiating fin approaches the recording face.

38. The optical pickup apparatus according to claim 36 wherein, said support plate is made of a material of copper or iron which has copper plated thereon.

39. The optical pickup apparatus according to claim 36 wherein, said optical pickup apparatus further comprises a resiliently deformable load beam in the form of a small-width plate having said support plate attached to one end in a longitudinal direction thereof, and said load beam transmits and radiates heat from said light source rapidly.

40. The optical pickup apparatus according to claim 39 wherein, said load beam has a heat radiating fin provided in a projecting manner in a direction in which said load beam approaches the recording face.

41. The optical pickup apparatus according to claim 39 wherein, said load beam is made of a material of copper or iron which has copper plated thereon.

42. The optical pickup apparatus according to claim 39 wherein, a gap is formed between said support plate and said load beam and filled with grease for transmission of heat.
